# FASCICULE DE BREVET EUROPEEN

(11) **EP 1 167 889 B1**
(45) Date de publication et mention de la délivrance du brevet: **21.12.2005**
(21) Numéro de dépôt: 01401646.3
(22) Date de dépôt: 21.06.2001
(51) Int. Cl.: F24F 5/00, F24F 12/00

(54) **Procédé et dispositif de climatisation d'une pièce d'un bâtiment**
Verfahren and Vorrichtung zur Klimatisierung eines Gebäuderaumes
Method and device for air conditioning of a room in a building

(30) Priorité: 28.06.2000 FR 0008329
(43) Date de publication de la demande: 02.01.2002
(73) Titulaire: Hora, 69570 Dardilly (FR)
(72) Inventeur: Bardy, Hervé, 69370 St Didier au Mont d'Or (FR)
(74) Mandataire: de Roquemaurel, Bruno

(56) Documents cités:
- EP-A- 0 320 349
- EP-A- 0 740 114
- BE-A- 481 366
- BE-A- 528 561
- DE-A- 3 908 108
- FR-A- 2 666 403
- FR-A- 2 778 228

## Description

La présente invention concerne un procédé de climatisation d'une pièce ou d'un bâtiment.

Elle s'applique notamment, mais non exclusivement, à l'abaissement ou à l'élévation de la température ambiante d'une pièce.

A l'heure actuelle, on connaît plusieurs solutions pour climatiser une pièce. Une solution consiste à disposer directement dans la pièce un appareil de climatisation qui souffle de l'air froid ou produit de l'air chaud directement dans la pièce. Cette solution présente l'inconvénient de ne pas permettre une répartition homogène de la température dans la pièce, ce qui entraîne une gêne pour les personnes présentes dans la pièce, et nécessite de prévoir un moyen d'évacuation de l'air chaud produit par l'appareil lorsqu'il refroidit l'air. En outre, lorsque plusieurs pièces d'un même bâtiment doivent être climatisées, cette solution nécessite d'installer un appareil par pièce. On peut supprimer ce dernier inconvénient en prévoyant un appareil unique envoyant de l'air à la température souhaitée dans un réseau de canalisations débouchant dans chaque pièce à climatiser. Un tel dispositif est par exemple décrit dans les documents FR 2 778 228. Il en résulte que cette solution n'offre pas non plus une répartition homogène de la température qui est bien évidemment plus basse au voisinage des bouches d'introduction de l'air refroidi.

On connaît par ailleurs, le principe des plafonds rayonnants chauds et froids, qui consiste à augmenter ou diminuer la température du plafond de la pièce selon que l'on souhaite augmenter ou au contraire diminuer la température de la pièce. Si le plafond est plus chaud que la pièce, celle-ci recevra de la chaleur par émission, et si au contraire, le plafond est plus froid que la pièce, celle-ci perdra de la chaleur par absorption. Pour modifier la température du plafond de la pièce, on peut faire circuler de l'eau dans des canalisations noyées dans le plafond ou disposées au dessus d'un faux plafond. Un tel dispositif est par exemple décrit dans les documents FR 2 666 403, BE 528 561 et BE 481366.

Toutefois, pour renouveler l'air dans la pièce, il est nécessaire de faire rentrer de l'air extérieur qui est plus chaud ou plus froid, ce qui diminue l'efficacité de la climatisation et empêche une répartition homogène de la température dans la pièce.

La présente invention a pour but de supprimer ces inconvénients. A cet effet, elle propose un procédé d'ajustement de la température de l'air d'une pièce d'un bâtiment, équipée d'un faux plafond, comprenant des étapes de :
- injection d'air par une ouverture d'injection dans le volume de faux plafond délimité par le plafond et le faux plafond de la pièce, et
- introduction dans la pièce de l'air provenant du volume de faux plafond par une ouverture d'introduction située à distance de l'ouverture d'injection.

Selon l'invention, l'air introduit dans le volume de faux plafond provient de l'extérieur du bâtiment et présente une température qui est inférieure à celle de l'air de la pièce, et qui se rapproche de celle de l'air de la pièce en circulant dans le volume de faux plafond, l'air circulant dans le volume de faux plafond étant introduit dans la pièce lorsqu'il a atteint une température sensiblement égale ou légèrement inférieure à celle de l'air de la pièce, le procédé comprenant en outre une étape d'extraction de l'air de la pièce par une ouverture d'extraction située à distance de l'ouverture d'introduction.

Grâce à ces dispositions, le procédé selon l'invention permet de renouveler l'air d'une pièce, et ce sans faire appel à une ouverture directe de la pièce sur l'extérieur, par exemple par une fenêtre. On évite ainsi les problèmes de bruit venant de l'extérieur du bâtiment. Dans un mode de climatisation, la température de la pièce est diminuée à la fois par abaissement de la température du faux plafond et par injection dans la pièce d'air à une température légèrement inférieure à celle de la pièce. Comme l'échange de chaleur se fait au niveau du faux plafond, il est effectué à distance des personnes se trouvant dans la pièce, ce qui évite toute gêne de celles-ci. On évite également les problèmes de condensation, car l'air injecté dans le volume de faux plafond est préalablement refroidi et se réchauffe en circulant dans le volume de faux plafond.

L'air injecté dans le volume de faux plafond peut être préalablement refroidi, si l'air extérieur présente une température trop élevée par rapport à la température souhaitée dans la pièce.

Selon un mode de réalisation de l'invention, pour augmenter la température de l'air de la pièce, l'air circulant dans le volume de faux plafond est chauffé au moyen de plaques de chauffage électrique rayonnant de la chaleur et de relativement faible puissance, disposées sur le faux plafond, pour que l'air au niveau de l'ouverture d'introduction atteigne une température sensiblement égale à celle de l'air de la pièce.

La température de la pièce est avantageusement commandée en réglant le débit d'air introduit dans le volume de faux plafond. Le procédé selon l'invention permet ainsi de commander la température d'une pièce tout en conservant une répartition sensiblement homogène dans la pièce.

Selon une autre particularité de l'invention, après avoir circulé dans le volume de faux plafond, l'air est introduit dans la pièce tangentiellement au faux plafond.

L'invention concerne également un dispositif pour la mise en oeuvre du procédé selon l'invention.

Un mode de réalisation du dispositif selon l'invention sera décrit ci-après, à titre d'exemple non limitatif, avec référence aux dessins annexés dans lesquels
La figure 1 représente schématiquement un dispositif selon invention installé dans un bâtiment montré partiellement en coupe ;
La figure 2 montre en détail l'entrée d'introduction d'air climatisé dans une pièce d'un bâtiment ;
La figure 3 montre en détail une plaque de faux plafond, équipée d'un dispositif de chauffage ;
Les figures 4 et 5 montrent sous la forme de courbes, la répartition des températures dans une pièce climatisée grâce au procédé selon l'invention.

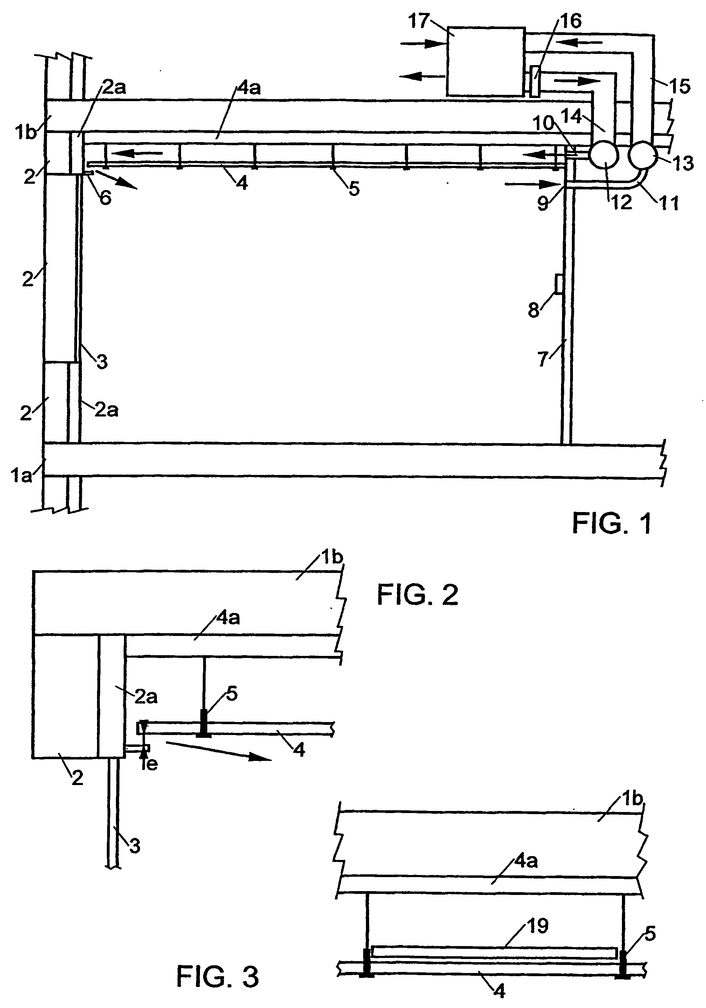

La figure 1 représente une pièce d'un bâtiment équipé du dispositif selon l'invention, cette pièce étant délimitée par des dalles inférieure et supérieure 1a, 1b, et d'un côté par un mur de façade 2 et une fenêtre 3, et de l'autre par une cloison 7.
Les faces intérieures de la dalle supérieure et du mur de façade sont avantageusement recouvertes de couches 2a, 4a thermiquement isolantes. La couche 4a recouvrant le plafond est par exemple constituée de laine minérale.

Le plafond de la pièce est en outre équipé d'un faux plafond constitué de dalles 4 fixées à distance du plafond par exemple par des entretoises 5, le volume de faux plafond délimité par la dalle supérieure 1b et les dalles de faux plafond 4 communiquant avec le volume de la pièce situé en dessous par une fente 31 le long de la face intérieure du mur de façade 2, au-dessus de la fenêtre 3.
Selon l'invention, de l'air frais provenant de l'extérieur du bâtiment, est injecté dans le volume de faux plafond par une ou plusieurs canalisations 10 débouchant dans ce volume par le côté opposé à la fente 31, de sorte que l'air injecté circule le long de toutes les dalles 4 entre les canalisations 10 et la fente 31.
Cet air frais provient d'une installation centrale 17 d'échange d'air avec l'extérieur, reliée aux canalisations 10 par l'intermédiaire d'une canalisation principale 14 et d'un circuit d'air frais 12.

Parallèlement, l'air de la pièce est aspiré vers extérieur par une bouche 9 située sur la cloison 7 à l'opposé du mur de façade 2, cette bouche étant reliée à l'installation centrale 17 par l'intermédiaire d'une canalisation secondaire 11, d'un circuit d'extraction d'air 13 et d'une canalisation principale 15.
Le dispositif 17 comprend des moyens tels que des ventilateurs pour assurer la circulation de l'air dans les circuits 12, 13 et dans les pièces du bâtiment. Il comprend également des moyens d'échange thermique de manière à réchauffer ou refroidir l'air entrant avec l'air sortant.

On peut avantageusement prévoir de disposer un registre à débit variable à l'entrée 10 d'air frais de chaque pièce, de manière à pouvoir commander le débit d'air introduit dans le volume de faux plafond en fonction l'écart entre une température de consigne réglée par un thermostat 8 et la température de l'air ambiant dans la pièce mesurée par une sonde associée au thermostat. Le thermostat 8 et sa sonde sont de préférence disposés dans la pièce du côté de la cloison 7.

Pour refroidir l'air aspiré à l'extérieur du bâtiment, on peut prévoir un dispositif de réfrigération 16 disposé sur la canalisation principale 14.

La figure 2 montre en détail la fente 31 d'introduction d'air frais dans la pièce, entre le bord des dalles 4 de faux plafond et la face intérieure du mur de façade 2. Sur cette figure, la fente 31 est masquée par une languette 6 fixée horizontalement sur la face intérieure du mur de façade 2, à faible distance e en dessous des dalles 4, de manière à ce l'air qui entre dans la pièce par la fente 31 suive une trajectoire sensiblement horizontale le long du faux plafond. Avantageusement, l'air qui entre ainsi dans la pièce présente une vitesse de l'ordre de 2 m/s.
La fente s'étend avantageusement sur toute la largeur de la pièce, ce qui permet d'obtenir un important taux de renouvellement de l'air dans la pièce, de l'ordre de quatre renouvellements d'air complets par heure, même avec une faible vitesse d'introduction de celui-ci, et pour une hauteur sous plafond standard (de l'ordre de 3 m).

La figure 3 montre en détail une dalle 4 de faux plafond, fixée à la dalle 1b. Au-dessus de la face supérieure de la dalle 4, est fixée une plaque chauffante électrique 19 de faible puissance (par exemple 70 W) conçue pour rayonner de la chaleur, la surface inférieure de la couche isolante 4a étant avantageusement revêtue d'une feuille d'aluminium rejointoyée pour renvoyer la chaleur émise par la plaque 19. L'alimentation électrique de la plaque 19 peut être commandée par le thermostat 8 pour contrôler la température de chauffage. En disposant des plaques chauffantes sur tout ou partie des dalles 4, on peut ainsi chauffer l'air frais venant de l'extérieur avant qu'il ne rentre dans la pièce.
On peut prévoir de ne disposer des plaques chauffantes 19 qu'au niveau d'une partie de circulation de l'air dans le volume de faux plafond, située du coté de la fente 31, l'air dans le faux plafond étant préalablement chauffé au contact des plaques 4 de faux plafond, qui sont chauffées par l'énergie s'échappant de la pièce au travers du faux plafond.

Le dispositif décrit est ainsi conçu pour maintenir une température constante dans un bâtiment quelque soit la température extérieure, tout en assurant le renouvellement de l'air dans le bâtiment.

Lorsque la température extérieure est très supérieure à la température de consigne affichée sur le thermostat 8, l'air extérieur est fortement refroidi au niveau de la conduite principale 14 d'aspiration d'air extérieur par le dispositif 16, avant d'être injecté dans le volume de faux plafond de la pièce. En passant lentement le long des dalles 4 de faux plafond, l'air froid se réchauffe, tout en refroidissant les dalles 4. Il en résulte que l'air de la pièce au voisinage des dalles 4 se refroidit également. L'air arrive ensuite au niveau de la fente 31 à une température sensiblement égale ou légèrement inférieure à celle de la pièce.

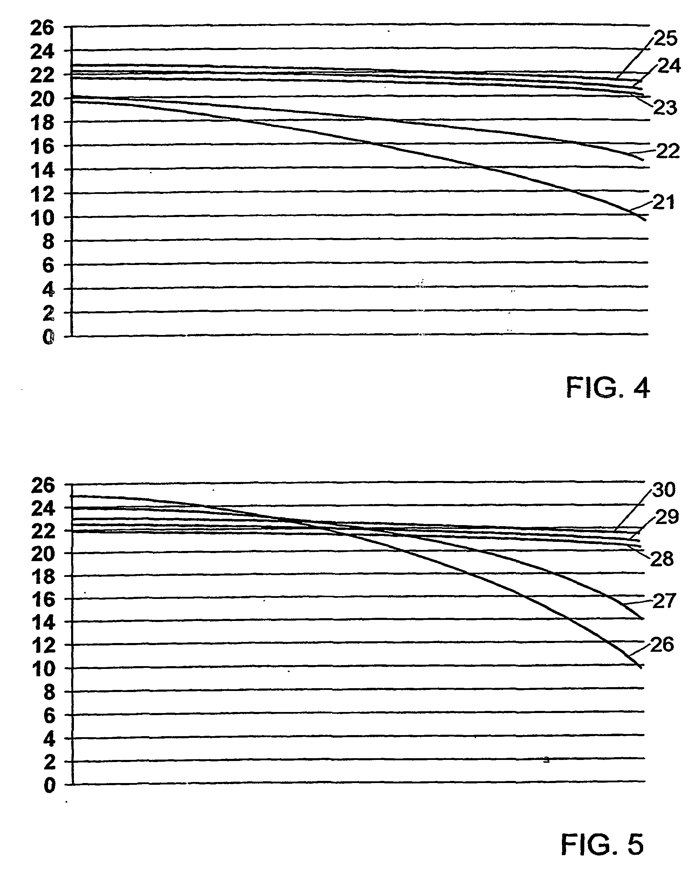

La figure 4 illustre sous la forme de courbes 21 à 25, la répartition de la température dans la pièce, la température étant donnée en ordonnée en fonction de la position du point de mesure dans la pièce, donnée en abscisse, en allant de la fenêtre 3 (à gauche sur la figure) à la cloison 7 (à droite).
Sur cette figure, la courbe 21 qui correspond à la répartition de la température dans le volume de faux plafond, montre que l'air pénètre dans le volume de faux plafond à une température aux environs de 10 °C et s'échauffe progressivement jusqu'à atteindre une température voisine de 20 °C au voisinage de la fente 31. La courbe 22 donne la répartition de la température des dalles 4, qui passe d'environ 14 °C à environ 20 °C au niveau de la fente 31. Les courbes 23 à 25 donnent la répartition de la température respectivement à la hauteur du plafond, à mi-hauteur et à la hauteur du plancher de la pièce. Ces courbes font apparaître que l'air qui entre dans la pièce est sensiblement à la température de la pièce, et que la température dans la pièce est sensiblement répartie d'une manière uniforme entre 20 et 23 °C.

Lorsque la température extérieure est voisine de la température de la pièce, le dispositif selon l'invention permet de ventiler et renouveler l'air de la pièce. Dans ce mode de fonctionnement, l'air à extérieur du bâtiment est introduit dans le volume de faux plafond sans subir de refroidissement. En traversant ce volume, sa température tend à se rapprocher de celle de la pièce, et lorsqu'il arrive au niveau de la fente 31, sa température est sensiblement à celle de l'air de la pièce, ou légèrement différente s'il y a un écart entre la température de consigne et la température de la pièce mesurée par la sonde.

Lorsque la température extérieure est très inférieure à celle de la pièce, les plaques 19 chauffantes sont sous tension électrique et chauffent progressivement l'air froid extérieur qui passe dans le volume de faux plafond, de manière à ce qu'il atteigne au niveau de la fente 31 une température sensiblement identique ou légèrement différente de celle de la pièce, en fonction de l'écart entre la température de consigne et la température de la pièce.

La figure 5 montre sous la forme de courbes 26 à 30, la répartition de la température dans la pièce, lorsque l'air extérieur est froid, et que les plaques chauffantes 19 réchauffent l'air traversant le volume de faux plafond.
Sur cette figure, la courbe 26 qui représente la répartition de la température dans le volume de faux plafond, montre que l'air pénètre dans le faux plafond à basse température, par exemple voisine de 10 °C, pour atteindre une température de l'ordre de 24 °C au niveau de la fente 31. La courbe 27 donne la répartition de la température des dalles 4 qui varie entre 14 °C au niveau de la bouche 10 et 24 °C au niveau de la fente 31. Les courbes 28 à 30 donnent la répartition de la température respectivement à la hauteur du plafond, à mi-hauteur et au niveau du plancher de la pièce. Ces courbes font encore apparaître que l'air qui entre dans la pièce est sensiblement à la température de la pièce, et que la température dans la pièce est sensiblement répartie d'une manière uniforme entre 20 et 23 °C.

## Revendications

1. Procédé d'ajustement de la température de l'air d'une pièce d'un bâtiment, équipée d'un faux plafond, comprenant des étapes de :
- injection d'air par une ouverture d'injection (10) dans le volume de faux plafond délimité par le plafond (1b) et le faux plafond (4) de la pièce, et
- introduction dans la pièce de l'air provenant du volume de faux plafond par une ouverture d'introduction (31) située à distance de l'ouverture d'injection (10),
**caractérisé en ce que** l'air introduit dans le volume de faux plafond provient de l'extérieur du bâtiment et présente une température qui est inférieure à celle de l'air de la pièce, et qui se rapproche de celle de l'air de la pièce en circulant dans le volume de faux plafond, l'air circulant dans le volume de faux plafond étant introduit dans la pièce lorsqu'il a atteint une température sensiblement égale ou légèrement inférieure à celle de l'air de la pièce, le procédé comprenant en outre une étape d'extraction de l'air de la pièce par une ouverture d'extraction (9) située à distance de l'ouverture d'introduction.

2. Procédé selon la revendication 1,
**caractérisé en ce que** pour abaisser la température de l'air de la pièce, l'air injecté dans le volume de faux plafond est préalablement refroidi, si l'air extérieur présente une température trop élevée par rapport à la température souhaitée dans la pièce.

3. Procédé selon la revendication 1 ou 2,
**caractérisé en ce que** pour augmenter la température de l'air de la pièce, l'air circulant dans le volume de faux plafond est chauffé au moyen de plaques de chauffage électrique rayonnant de la chaleur et de relativement faible puissance, disposées sur le faux plafond, pour que l'air au niveau de l'ouverture d'introduction atteigne une température sensiblement égale à celle de l'air de la pièce.

4. Procédé selon l'une des revendications 1 à 3,
**caractérisé en ce que** la température de la pièce est avantageusement commandée en réglant le débit d'air introduit dans le volume de faux plafond.

5. Procédé selon l'une des revendications 1 à 4,
**caractérisé en ce qu'**après avoir circulé dans le volume de faux plafond, l'air est introduit dans la pièce tangentiellement au faux plafond (4).

6. Dispositif d'ajustement de la température de l'air d'une pièce d'un bâtiment, comprenant:
- un faux plafond (4) délimitant un volume de faux plafond au niveau du plafond de la pièce, et permettant des échanges thermiques entre le volume de faux plafond et le volume de la pièce,
- une ouverture d'injection (10) d'air dans le volume de faux plafond,
- une ouverture d'introduction (31) d'air entre le volume de faux plafond et le volume de la pièce, située à distance de l'ouverture d'injection,
**caractérisé en ce qu'**il comprend en outre:
- des plaques chauffantes (19) de faible puissance et rayonnant de la chaleur, disposées au dessus de la face supérieure du faux plafond,
- un dispositif (17) d'aspiration d'air extérieur au bâtiment relié à l'ouverture d'injection (10),
- une ouverture d'extraction (9) d'air de la pièce située à distance de l'ouverture d'introduction (31).

7. Dispositif selon la revendication 6,
**caractérisé en ce qu'**il comprend des moyens (16) de refroidissement d'air disposé entre le dispositif (17) d'aspiration d'air frais et l'ouverture d'injection (10).

8. Dispositif selon la revendication 6 ou 7,
**caractérisé en ce qu'**il comprend un dispositif (17) d'aspiration de l'air dans la pièce relié à l'ouverture d'extraction (9)

9. Dispositif selon l'une des revendications 6 à 8,
**caractérisé en ce que** l'ouverture (31) est constituée par une fente délimitée par un bord du faux plafond (4) et la face intérieure d'un mur (2) du bâtiment.

10. Dispositif selon la revendication 9,
**caractérisé en ce que** la fente (31) est masquée par une languette (6) fixée horizontalement sur la face intérieure du mur (2) en regard de la fente (31), de manière à ce que flux d'air entrant dans la pièce soit sensiblement horizontal.

11. Dispositif selon l'une des revendications 6 à 10,
**caractérisé en ce qu'**il comprend un dispositif (17) d'échange thermique entre l'air frais introduit dans la pièce et l'air extrait de la pièce.

12. Dispositif selon l'une des revendications 6 à 11,
**caractérisé en ce que** les plaques chauffantes (19) sont disposées au voisinage de l'ouverture d'introduction (31).

## Patentansprüche

1. Verfahren zum Einstellen der Luft-Temperatur eines Teils eines Gebäudes, welches mit einer falschen Decke versehen ist, umfassend die Schritte:
- Injizieren von Luft durch eine Injektions-Öffnung (10) in das durch die Decke (1b) und die falsche Decke (4) des Teils begrenzte Falsche-Decke-Volumen, und
- Einführen von Luft in das Teil, welche dem Falsche-Decke- Volumen entstammt, durch eine mit Abstand zur Injektions-Öffnung (10) angeordnete Einführ-Öffnung (31),
**dadurch gekennzeichnet, dass** die in das Falsche-Decke-Volumen eingeführte Luft von außerhalb des Gebäudes stammt, und eine Temperatur aufweist, welche geringer ist als diejenige der Luft des Teils, und welche sich beim Zirkulieren in dem Falsche-Decke-Volumen derjenigen der Luft des Teils nähert, wobei die Luft, welche in dem Falsche-Decke-Volumen zirkuliert, in das Teil eingeführt wird, wenn sie eine Temperatur erreicht hat, welche im Wesentlichen gleich zu oder leicht geringer ist als diejenige der Luft des Teils, wobei das Verfahren ferner einen Schritt zur Extraktion von Luft aus dem Teil durch eine Extraktions-Öffnung (9) umfasst, welche mit Abstand zur Einführ-Öffnung angeordnet ist.

2. Verfahren gemäß Anspruch 1,
**dadurch gekennzeichnet, dass** zum Absenken der Luft-Temperatur des Teils die in das Falsche-Decke-Volumen injizierte Luft vorab gekühlt wird, wenn die äußere Luft bezüglich der in dem Teil gewünschten Temperatur eine zu hohe Temperatur aufweist.

3. Verfahren gemäß Anspruch 1 oder 2,
**dadurch gekennzeichnet, dass** zum Erhöhen der Luft-Temperatur des Teils die Luft, welche in dem Falsche-Decke-Volumen zirkuliert, mittels elektrischer Heizplatten erwärmt wird, welche Wärme abstrahlen und von relativ geringer Leistung sind, und welche an der falschen Decke angeordnet sind, damit die Luft auf Höhe der Einführ-Öffnung eine Temperatur erreichen möge, welche im Wesentlichen gleich ist zu derjenigen der Luft des Teils.

4. Verfahren gemäß einem der Ansprüche 1 bis 3,
**dadurch gekennzeichnet, dass** die Temperatur des Teils vorzugsweise mittels Regeln/Steuern der in das Falsche-Decke-Volumen eingeführten Luft-Menge gesteuert ist.

5. Verfahren gemäß einem der Ansprüche 1 bis 4,
**dadurch gekennzeichnet, dass** nach Zirkulieren in dem Falsche-Decke-Volumen die Luft in das Teil tangential zur falschen Decke (4) eingeführt wird.

6. Vorrichtung zum Einstellen der Luft-Temperatur eines Teils eines Gebäudes, umfassend:
- eine falschen Decke (4), welche auf Höhe der Decke des Teils ein Falsche-Decke-Volumen begrenzt, und Wärmetausch zwischen dem Falsche-Decke-Volumen und dem Volumen des Teils ermöglicht,
- eine Öffnung (10) zur Injektion von Luft in das Falsche-Decke-Volumen,
- eine Öffnung (31) zum Einführen von Luft zwischen dem Falsche-Decke-Volumen und dem Volumen des Teils, welche mit Abstand zur Injektions-Öffnung angeordnet ist,
**dadurch gekennzeichnet, dass** sie ferner umfasst:
- Wärme abstrahlende Heiz-Platten (19) geringer Leistung, welche oberhalb der Oberseite der falschen Decke angeordnet sind,
- eine Vorrichtung (17) zum Ansaugen von Luft von außerhalb des Gebäudes, welche mit der Injektions-Öffnung (10) verbunden ist,
- eine Öffnung (9) zur Extraktion von Luft von dem Teil, welche mit Abstand zu der Einführ-Öffnung (31) angeordnet ist.

7. Vorrichtung gemäß Anspruch 6,
**dadurch gekennzeichnet, dass** sie Mittel (16) zum Kühlen von Luft umfasst, welche zwischen der Vorrichtung (17) zum Ansaugen kalter Luft und der Injektions-Öffnung (10) angeordnet sind.

8. Vorrichtung gemäß Anspruch 6 oder 7,
**dadurch gekennzeichnet, dass** sie eine Vorrichtung (17) zum Ansaugen von Luft in dem Teil umfasst, welche mit der Extraktions-Öffnung (9) verbunden ist.

9. Vorrichtung gemäß einem der Ansprüche 6 bis 8,
**dadurch gekennzeichnet, dass** die Öffnung (31) von einem Schlitz gebildet wird, welcher von einem Rand der falschen Decke (4) und der Innenseite einer Mauer (2) des Gebäudes begrenzt wird.

10. Vorrichtung gemäß Anspruch 9,
**dadurch gekennzeichnet, dass** der Schlitz (31) von einer Leiste (6) maskiert ist, welche horizontal an der Innenseite der Mauer (2), dem Schlitz (31) gegenüberliegend, fixiert ist, so dass in das Teil eintretender Luft-Fluss im Wesentlichen horizontal sei.

11. Vorrichtung gemäß einem der Ansprüche 6 bis 10,
**dadurch gekennzeichnet, dass** sie eine Vorrichtung (17) zum Wärmetausch zwischen der in das Teil eingeführten kalten Luft und der von dem Teil extrahierten Luft umfasst.

12. Vorrichtung gemäß einem der Ansprüche 6 bis 11,
**dadurch gekennzeichnet, dass** die Heiz-Platten (19) in der Nähe der Einführ-Öffnung (31) angeordnet sind.

## Claims

1. Method of adjusting the temperature of the air in a room in a building, equipped with a false ceiling, comprising steps of:
- injecting air through an injection opening (10) in the false-ceiling volume delimited by the ceiling (1b) and the false ceiling (4) of the room, and
- introducing into the room air coming from the false-ceiling volume through an introduction opening (31) situated at a distance from the injection opening (10),
**characterised in that** the air introduced into the false-ceiling volume comes from outside the building and has a temperature that is lower than that of the air in the room and becomes closer to that of the air in the room by circulating in the false-ceiling volume, the air circulating in the false-ceiling volume being introduced into the room when it has reached a temperature substantially equal to or slightly lower than that of the air in the room, the method also comprising a step of extracting air from the room through an extraction opening (9) situated at a distance from the introduction opening.

2. Method according to claim 1, **characterised in that**, in order to reduce the temperature of the air in the room, the air injected into the false-ceiling volume is previously cooled if the external air has a too high temperature compared with the temperature required in the room.

3. Method according to claim 1 or 2, **characterised in that**, in order to increase the temperature of the air in the room, the air circulating in the false-ceiling volume is heated by means of heat-radiating electric heating plates of relatively low power, disposed on the false ceiling, so that the air at the introduction opening attains a temperature substantially equal to that of the air in the room.

4. Method according to one of claims 1 to 3, **characterised in that** the temperature of the room is advantageously controlled by adjusting the flow of air introduced into the false-ceiling volume.

5. Method according to one of claims 1 to 4, **characterised in that**, after having circulated in the false-ceiling volume, the air is introduced into the room tangentially to the false ceiling (4).

6. Device for adjusting the temperature of the air in a room in a building, comprising:
- a false ceiling (4) delimiting a false-ceiling volume at the room ceiling and allowing heat exchanges between the false-ceiling volume and the volume of the room,
- an opening (10) for injecting air into the false-ceiling volume,
- an opening (31) for introducing air between the false-ceiling volume and the volume of the room, situated at a distance from the injection opening,
**characterised in that** it also comprises:
- heat radiating low-power heating plates (19), disposed above the top face of the false ceiling,
- a device (17) for sucking in air external to the building, connected to the injection opening (10),
- an opening (9) for extracting air from the room situated at a distance from the introduction opening (31).

7. Device according to claim 6, **characterised in that** it comprises air cooling means (16) disposed between the fresh-air suction device (17) and the injection opening (10).

8. Device according to claim 6 or 7, **characterised in that** it comprises a device (17) for sucking air into the room connected to the extraction opening (9).

9. Device according to one of claims 6 to 8, **characterised in that** the opening (31) consists of a slot delimited by an edge of the false ceiling (4) and the internal face of a wall (2) of the building.

10. Device according to claim 9, **characterised in that** the slot (31) is masked by a tongue (6) fixed horizontally to the internal face of the wall (2) opposite the slot (31), so that the air flow entering the room is substantially horizontal.

11. Device according to one of claims 6 to 10, **characterised in that** it comprises a heat exchange device (17) between the fresh air introduced into the room and the air extracted from the room.

12. Device according to one of claims 6 to 11, **characterised in that** the heating plates (19) are disposed in the vicinity of the introduction opening (31).
